# FASCICULE DE BREVET EUROPEEN

(11) **EP 4 046 457 B1**
(45) Date de publication et mention de la délivrance du brevet: **19.03.2025**
(21) Numéro de dépôt: 20789202.7
(22) Date de dépôt: 16.10.2020
(51) Int. Cl.: H04W 76/12, H04L 12/46, H04W 84/00, H04W 84/12, H04L 61/50, H04W 84/10

(54) **PROCEDE DE CONNEXION D'UN NOEUD DE COMMUNICATION, ET NOEUD DE COMMUNICATION CORRESPONDANT**
VERFAHREN ZUM VERBINDUNGSAUFBAU ZU EINEM KOMMUNIKATIONSKNOTEN UND ENTSPRECHENDER KOMMUNIKATIONSKNOTEN
METHOD FOR CONNECTING A COMMUNICATION NODE, AND CORRESPONDING COMMUNICATION NODE

(30) Priorité: 18.10.2019 FR 1911705
(43) Date de publication de la demande: 24.08.2022
(73) Titulaire: Sagemcom Broadband SAS, 92270 Bois-Colombes (FR)
(72) Inventeur: JAULIN, Jean-Philippe, 92500 RUEIL MALMAISON (FR); ALARCON, Laurent, 92500 RUEIL MALMAISON (FR)
(74) Mandataire: Cabinet Le Guen Maillet
(86) Numéro de dépôt international: PCT/EP2020/079262
(87) Numéro de publication internationale: WO 2021/074412

(56) Documents cités:
- WO-A1-2015/075569
- WO-A2-2007/096884
- US-A1- 2017 272 273
- AVM GMBH: "FRITZ!Box 6842 LTE Einrichten und bedienen", 1 May 2014 (2014-05-01), pages 1 - 212, XP055231265, Retrieved from the Internet <URL:http://img.billiger.de/dynimg/H5r90H8yeGyX90aFpmTDmHt4H9rycHjeBa9LTdXG2DA41-ZtYq5viO3lVPqWBj4_HexpdHaClz88YR5bxwk6-U/Bedienungsanleitung.pdf> [retrieved on 20151125]

## Description

### DOMAINE TECHNIQUE

Au moins un mode de réalisation concerne un procédé de connexion d'un nœud d'un système d'extension de couverture de communication sans-fil. Au moins un mode de réalisation concerne un nœud de communication implémentant ledit procédé.

### ETAT DE LA TECHNIQUE ANTERIEURE

Dans les réseaux locaux LAN (« Local Area Network » en anglais), des systèmes d'extension de couverture de communication sans-fil peuvent être utilisés afin d'augmenter la portée de ces réseaux locaux LAN en coordonnant plusieurs points d'accès AP («

Access Point » en anglais) répartis. Ces différents points d'accès AP sont intégrés à des nœuds de communication, appelés simplement ci-après nœuds, interconnectés grâce à un sous-réseau d'acheminement ou d'amenée (« backhaul subnetwork » en anglais) et mettent tous à disposition un même réseau local sans-fil WLAN (« Wireless Local Area Network » en anglais). Dans le cadre de la technologie Wi-Fi (marque déposée), tous ces points d'accès AP utilisent ainsi un même identifiant SSID (« Service Set IDentifier » en anglais) et un même mot de passe (aussi appelé clef de sécurité). Ainsi, l'extension de couverture de communication sans-fil est transparente pour les dispositifs connectés au réseau local sans-fil WLAN. La demande de brevet US2017/272273 A1 divulgue un système WLAN doté d'une fonction d'intégration, "on-boarding", pour les nouveaux nœuds.

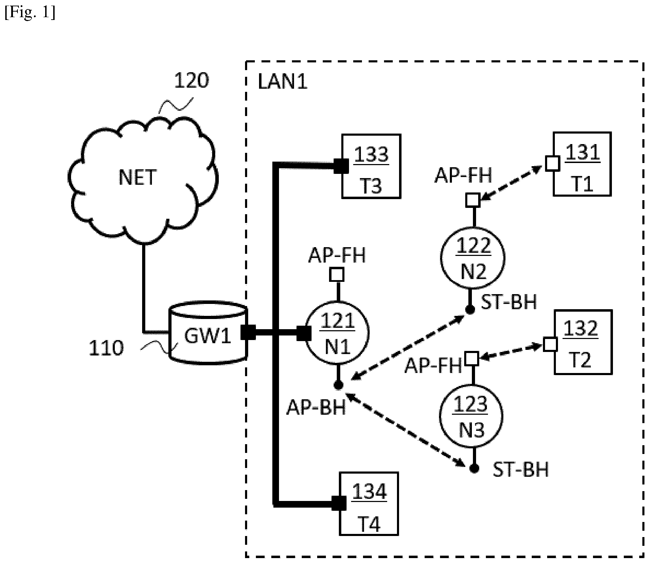

La **Fig. 1** illustre schématiquement un système de communication comprenant un système d'extension de couverture de communication sans-fil construit autour d'un sous-réseau d'acheminement comportant un ensemble de nœuds N1 121, N2 122, N3 123 interconnectés. Ainsi, chaque nœud N1 121, N2 122, N3 123 du sous-réseau d'acheminement comprend une pluralité d'interfaces radio :
- une interface radio dite « AP-BH » (pour « Access Point Backhaul » en anglais) correspondant à une interface point d'accès du sous-réseau d'acheminement,
- une interface radio « ST-BH » (pour « Station Backhaul » en anglais) correspondant à une interface client du sous-réseau d'acheminement,
- une interface radio « AP-FH » (pour « Access Point Fronthaul » en anglais) correspondant à une interface point d'accès du réseau local LAN1, cette interface étant dédiée à l'association de stations ou terminaux.

Dans le cadre de la technologie Wi-Fi (marque déposée), tous ces points d'accès AP-FH utilisent ainsi un même identifiant SSID et un même mot de passe. La zone de couverture du réseau local LAN1 ainsi constitué autour du système d'extension de couverture de communication sans-fil, est alors étendue de manière transparente pour chaque terminal, ou station, qui s'y connecte.

Les nœuds N1 121, N2 122, N3 123 du sous-réseau d'acheminement sont connectés les uns aux autres grâce à une structure en forme d'arbre, un nœud pouvant alors servir de relais entre deux autres nœuds du sous-réseau d'acheminement. Les nœuds N1 121, N2 122, N3 123 sont ainsi interconnectés grâce à des liaisons filaires, par exemple de type Ethernet, ou à des liaisons sans-fil. Les nœuds N1 121, N2 122, N3 123 du sous-réseau d'acheminement communiquent ainsi entre eux grâce à des liaisons logiques, par exemple des communications IP ou des tunnels chiffrés ou des communications selon un protocole de communication propriétaire. L'établissement de ces liaisons logiques s'effectue typiquement grâce à des messages de sonde (« probe » en anglais) et de découverte (« discovery » en anglais). Cependant, lorsqu'une interface filaire est utilisée pour le sous-réseau d'acheminement, cette interface filaire ne peut pas être utilisée à un autre dessein, notamment pas pour y connecter un terminal.

De manière illustrative, la Fig. 1 montre que le nœud N1 121 est connecté au nœud N2 122 grâce à une liaison sans-fil entre l'interface radio point d'accès AP-BH du nœud N1 121 et l'interface radio client ST-BH du nœud N2 122. Le nœud N1 121 est également connecté au nœud N3 123 grâce à une liaison sans-fil entre l'interface radio point d'accès AP-BH du nœud N1 121 et l'interface radio client ST-BH du nœud N3 123. Sur la Fig.1, les liaisons filaires sont représentées en traits pleins et les liaisons sans fil en traits pointillés. Les liaisons entre deux nœuds du sous-réseau d'acheminement sont appelées liaisons d'acheminement ou liaisons « backhaul » et peuvent être filaires ou sans fil.

Le système d'extension de couverture de communication sans-fil permet ainsi d'interconnecter une passerelle GW1 110 d'accès à l'Internet 120, un terminal T1 131, un terminal T2 132, un terminal T3 133 et un terminal T4 134. Le terminal T1 131 est connecté par une liaison sans-fil au nœud N2 122. Le terminal T1 131 est ainsi connecté au réseau local LAN1 grâce au nœud N2 122 agissant comme point d'accès dit « fronthaul ».

Le terminal T1 131 est par exemple un téléphone intelligent (« smartphone » en anglais) ou une tablette. Le terminal T2 132 est par exemple un PC connecté par une liaison sans-fil au nœud N3 123. Le terminal T3 133 est par exemple une télévision connectée par une liaison filaire, représentée en trait plein, à la passerelle GW1. Le terminal T4 134 est par exemple une unité de stockage en réseau NAS (« Network Attached Storage » en anglais) connectée par une liaison filaire à la passerelle GW1.

Les nœuds du sous-réseau d'acheminement sont coordonnés de manière centralisée, par un nœud maître, e.g. le nœud N1 121 sur la Fig. 1, choisi parmi lesdits nœuds du sous-réseau d'acheminement. Tous les nœuds du sous-réseau d'acheminement ont ainsi connaissance du nœud maître, et sont capables de l'identifier grâce à son adresse MAC et/ou de son adresse réseau (e.g., adresse IP). Tous les nœuds du sous-réseau d'acheminement ont aussi connaissance de tous les autres nœuds du sous-réseau d'acheminement et sont capables de les identifier grâce à leurs adresses MAC et/ou de leurs adresses réseau (e.g., adresses IP). Les terminaux ainsi connectés au réseau local LAN1 peuvent bénéficier de divers services. Par exemple, l'unité de stockage en réseau NAS (T4 134) peut proposer au PC (T2 132) le montage d'un disque réseau au moyen d'un protocole particulier, e.g. le protocole Samba. La tablette (T1 131) peut envoyer un flux vidéo sur une TV connectée (T3 133) en utilisant un protocole particulier de type Chromecast.

Dès lors que les terminaux T1 et T2 ne sont plus raccordés au même LAN que les terminaux T3 et T4, ces services ne sont plus disponibles. C'est le cas notamment, si le terminal T1 131 ou T2 132 est déplacé par un utilisateur, e.g. lors d'un départ en vacances. Il est connu d'utiliser des tunnels IP pour créer des réseaux privés virtuels, dits VPN, (« Virtual Private Network » en anglais). SSL (acronyme anglais de « Secure Sockets Layer ») et son successeur TLS (acronyme anglais de « Transport Layer Security ») sont des protocoles utilisés par le VPN. Cette solution permet de faire communiquer de manière sécurisée deux portions distantes d'un même réseau local en empruntant un réseau tiers. Toutefois, elle nécessite de mettre en place autant de VPN qu'il y a de terminaux à connecter. Ainsi, dans le cas de la Fig. 1, si les terminaux T1 et T2 sont déplacés, p.ex. sur un lieu de vacances, il est nécessaire de mettre en place deux VPNs, i.e. un pour chaque terminal. Cette solution est donc coûteuse à mettre en œuvre.

En outre, cette solution nécessite une connaissance préalable de l'adresse du réseau LAN distant, ainsi que des paramètres d'accès permettant d'établir la communication, à la manière de ce qui est utilisé pour se connecter à distance au réseau d'entreprise lors d'un déplacement vers un réseau tiers. Une telle solution est donc compliquée à mettre en œuvre pour un utilisateur novice.

Il est alors souhaitable de pallier ces inconvénients de l'état de la technique.

### EXPOSE DE L'INVENTION

L'invention est définie par les revendications indépendantes. D'autres modes de réalisation sont définis dans les revendications dépendantes.

Selon un premier mode de réalisation, un procédé de connexion d'un nœud d'un système d'extension de couverture de communication sans-fil est décrit. Le système d'extension de couverture de communication sans-fil comporte un sous-réseau d'acheminement en forme d'arbre comportant un ensemble de nœuds interconnectés sans-fil ou de manière filaire par des liaisons dites d'acheminement. Une pluralité de nœuds du sous-réseau d'acheminement implémente une fonctionnalité de point d'accès d'un même réseau de communication sans-fil. Le système d'extension de couverture de communication sans-fil est adapté pour permettre de connecter des dispositifs auxdits nœuds par le biais du réseau de communication sans-fil ou de manière filaire afin de former un réseau local initial. Le procédé de connexion comprend les étapes suivantes exécutées par le nœud à connecter :
- déterminer si ledit nœud a été déplacé hors dudit réseau local initial ;
et dans le cas où le nœud a été déplacé :
- mettre en place un réseau local à partir dudit nœud déplacé en activant une fonctionnalité de serveur d'adresses ;
- connecter ledit nœud déplacé à un point d'accès à l'internet ;
- mettre en place un tunnel sécurisé entre ledit nœud déplacé et un nœud maître coordonnant ledit réseau local initial ;
- désactiver la fonctionnalité de serveur d'adresses et activer une fonctionnalité de client d'un serveur d'adresses dudit réseau local initial.

Dans un mode particulier de réalisation, déterminer si ledit nœud a été déplacé hors dudit réseau local initial comprend :
- tenter d'établir pendant une durée prédéfinie une liaison d'acheminement entre ledit nœud et au moins un autre nœud dudit sous-réseau d'acheminement ;
- déterminer que ledit nœud a été déplacé hors dudit réseau local initial dans le cas où ladite tentative a échoué.

Dans une variante, déterminer si ledit nœud a été déplacé hors dudit réseau local initial comprend : déterminer que ledit nœud a été déplacé hors dudit réseau local initial dans le cas où une liste de points d'accès visibles par une interface radio dudit nœud est très différente d'une seconde liste de points d'accès stockée en mémoire, ladite seconde liste étant une liste de points d'accès qui étaient visibles par ladite interface radio lorsque ledit nœud était dans ledit réseau local initial.

Dans un mode particulier de réalisation, mettre en place un réseau local à partir dudit nœud déplacé en activant une fonctionnalité de serveur d'adresses comprend :
- mettre en fonction sa fonctionnalité de point d'accès dudit réseau de communication sans-fil;
- mettre en place une fonctionnalité de serveur DHCP et une fonctionnalité de serveur DNS ; et
- envoyer un bail DHCP aux terminaux qui en font la demande.

Dans un mode particulier de réalisation, connecter ledit nœud déplacé à un point d'accès à l'internet comprend :
- déterminer une liste d'au moins un point d'accès auquel ledit nœud peut se connecter ;
- sélectionner un point d'accès dans ladite liste à partir d'une page web affichée sur un écran d'un terminal connecté audit nœud déplacé ; et
- connecter ledit nœud déplacé audit point d'accès sélectionné.

Dans un mode particulier de réalisation, ledit point d'accès sélectionné est une première passerelle d'accès à l'Internet.

Dans un mode particulier de réalisation, mettre en place un tunnel sécurisé entre le nœud déplacé et ledit nœud maître, ledit nœud maître étant connecté à une seconde passerelle d'accès à l'internet, comprend:
a) envoyer à destination d'un nom de domaine correspondant à ladite seconde passerelle au travers d'un port prédéfini une demande de connexion, ladite demande de connexion comprenant un certificat client dudit nœud déplacé signé par un certificat racine d'un nœud courant ; et
b) si ledit certificat client est reçu et validé par ledit nœud maître :
   - recevoir un certificat serveur dudit nœud maître signé par un certificat racine dudit nœud maître ;
   - valider le certificat serveur reçu en utilisant le certificat racine dudit nœud maître ;
   - établir un tunnel entre ledit nœud et ledit nœud maître.
c) sinon répéter les étapes a) à c) jusqu'à ce que ledit tunnel soit établi entre ledit nœud et ledit nœud maître, lesdites étapes étant répétées avec ladite demande de connexion comprenant un certificat client dudit nœud déplacé signé par un certificat racine d'un autre nœud différent dudit nœud courant.

Un nœud d'un système d'extension de couverture de communication sans-fil est également décrit. Le nœud est configuré pour exécuter les étapes du procédé de connexion selon l'un des modes de réalisation décrits ci-dessus.

Un programme d'ordinateur est décrit. Le programme d'ordinateur comprend des instructions pour mettre en œuvre, par un nœud d'un sous-réseau d'acheminement d'un système d'extension de couverture de communication sans-fil, le procédé de connexion selon l'un des modes de réalisation décrits ci-dessus, lorsque ledit programme est exécuté par un processeur dudit nœud.

Des moyens de stockage sont décrits. Les moyens de stockage stockent un programme d'ordinateur comprenant des instructions pour mettre en œuvre, par un nœud d'un sous-réseau d'acheminement d'un système d'extension de couverture de communication sans-fil, le procédé de connexion selon l'un des modes de réalisation décrits ci-dessus, lorsque ledit programme est exécuté par un processeur dudit nœud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement l'architecture d'un système de communication comprenant un système d'extension de couverture de communication sans-fil construit autour d'un sous-réseau d'acheminement comportant un ensemble de nœuds interconnectés ;
[Fig. 2] illustre schématiquement l'architecture d'un système de communication comprenant un système d'extension de couverture de communication sans-fil construit autour d'un sous-réseau d'acheminement comportant un ensemble de nœuds interconnectés selon un mode particulier de réalisation ;
[Fig. 3] illustre schématiquement un procédé de connexion d'un nœud nomade à un réseau local initial selon un mode particulier de réalisation ;
[Fig. 4A] illustre schématiquement une mise en œuvre particulière d'une étape du procédé de connexion ;
[Fig. 4B] illustre schématiquement une mise en œuvre particulière d'une étape du procédé de connexion ;
[Fig. 5] illustre schématiquement une mise en œuvre particulière d'une étape du procédé de connexion ;
[Fig. 6] illustre schématiquement une mise en œuvre particulière d'une étape du procédé de connexion ;
[Fig. 7] illustre schématiquement un procédé de configuration de paramètres (e.g. certificats, clés publiques et privées) utiles à la mise en œuvre d'un tunnel sécurisé ;
[Fig. 8] illustre schématiquement une mise en œuvre particulière d'un tunnel sécurisé entre un nœud maître et un nœud nomade ; et
[Fig. 9] illustre schématiquement l'architecture matérielle d'un nœud d'un réseau de communication sans fil, le nœud étant configuré pour exécuter tout ou partie des étapes des procédés illustré dans les Figs. 3 à 8.

### EXPOSE DETAILLE DE MODES DE REALISATION

Au moins un mode de réalisation permet de connecter un nœud à son réseau local d'origine, dit réseau local initial, après que ledit nœud a été déplacé vers un autre réseau local et ainsi offrir aux terminaux mobiles qui lui sont connectés les services proposés par le réseau local initial.

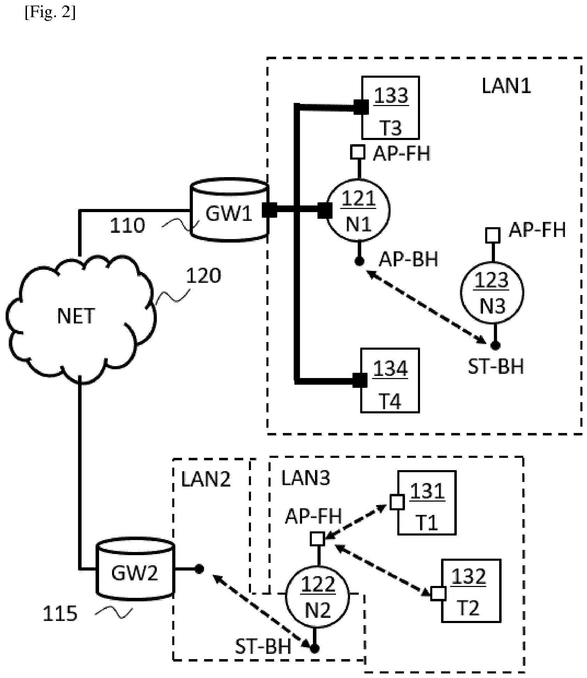

La **Fig. 2** illustre schématiquement un système de communication comprenant un système d'extension de couverture de communication sans-fil construit autour d'un sous-réseau d'acheminement comportant un ensemble de nœuds N1 121, N2 122, N3 123 interconnectés. Les nœuds N1 121, N2 122, N3 123 faisaient initialement tous partie d'un même réseau local initial LAN1. Le nœud N2 122 a ensuite été déplacé hors de ce réseau local initial LAN1. Par exemple, le nœud N2 122 a été déplacé par un utilisateur qui l'a amené sur son lieu de vacances. Sur cette figure, le nœud déplacé ou nœud nomade N2 122 est connecté par son interface radio ST-BH à une passerelle d'accès à l'internet GW2 115. La passerelle GW2 présente un réseau local LAN2. Dans la suite du document, les nœuds N1 121, N2 122 et N3 123 sont appelés respectivement N1, N2 et N3.

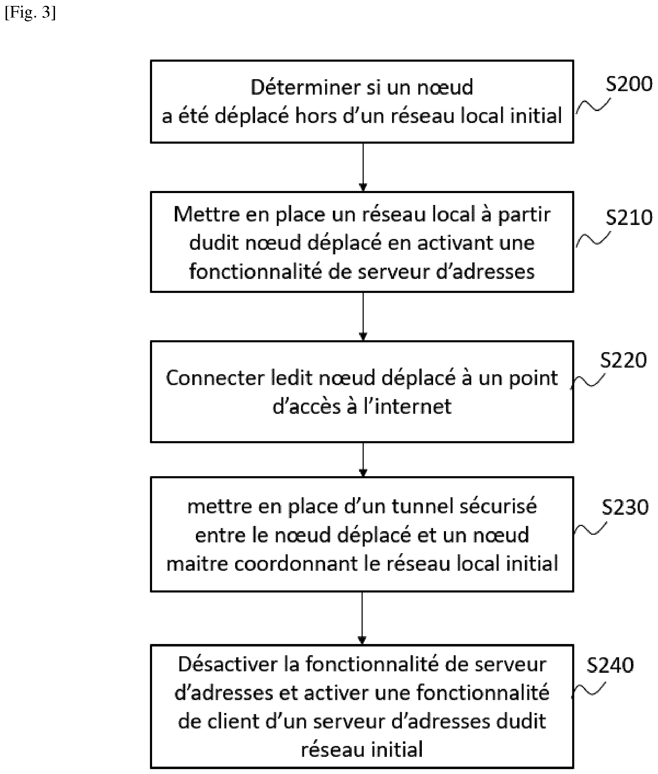

**La** **Fig.3** illustre schématiquement un procédé de connexion d'un nœud déplacé au réseau local initial LAN1.

Lors d'une étape S200, le nœud N2 détermine s'il a été déplacé hors de son réseau local initial LAN1.

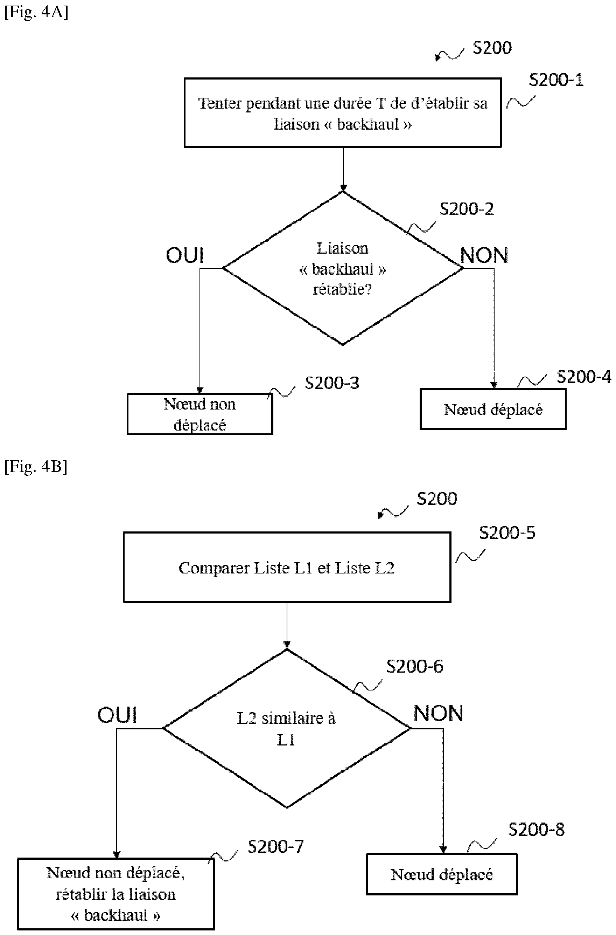

La **Fig.4A** illustre schématiquement une mise en œuvre particulière de l'étape S200.

Lors de sa mise sous tension, le nœud N2 préalablement connecté au réseau local initial LAN1 cherche à rétablir sa liaison « backhaul » (S200-1) pendant une durée T. Par exemple, T est égale à 2 min. A cet effet, le nœud N2 recherche sur ses différentes interfaces radio un point d'accès dont les caractéristiques correspondent à des caractéristiques (e.g. les caractéristiques du point d'accès AP-BH du nœud N1) stockées en mémoire lors d'une connexion préalable. Un exemple de caractéristique est le BSSID

(« Basic Service Set Identifiers »). La connexion préalable a eu lieu avant le déplacement dudit nœud N2, i.e. lorsque celui-ci faisait encore partie du réseau local initial LAN1. S'il trouve un tel point d'accès, alors le nœud N2 s'y connecte, i.e. qu'il rétablit sa liaison « backhaul » en utilisant un procédé classique de mise en œuvre d'un réseau Wi-Fi utilisant un lien sans-fil. Il peut également sonder la présence d'une telle liaison « backhaul » au travers de ses interfaces filaires en vue d'établir ce lien en utilisant un procédé normal de mise en œuvre d'un réseau Wi-Fi utilisant un lien filaire. La liaison « backhaul » ayant été rétablie entre le nœud N2 et par exemple le nœud N1 alors le nœud N2 détermine qu'il n'a pas été déplacé (S200-3). Si le nœud n'a pas réussi à rétablir cette liaison « backhaul » (S200-2), alors le nœud N2 détermine qu'il a été déplacé (S200-4).

La **Fig. 4B** illustre une variante de réalisation de l'étape S200. Lors d'une l'étape S200-5, le nœud N2, à sa mise sous tension, compare une liste L1 des points d'accès visibles dans son voisinage par ses interfaces radio à une liste L2 stockée en mémoire. La liste L2 est une liste des points d'accès qui étaient visibles par ses interfaces radio avant son éventuel déplacement. Ainsi, si les deux listes sont similaires (S200-6) alors le nœud N2 détermine qu'il n'a pas été déplacé (S200-7). Il rétablit donc sa liaison « backhaul ». Si les listes sont très différentes alors le nœud N2 détermine qu'il a été déplacé (S200-8). Les listes sont considérées comme similaires si un certain pourcentage des points d'accès est commun aux deux listes, e.g. 50%. Dans un mode de réalisation, les listes sont considérées comme similaires si le pourcentage P de points d'accès de la liste L1 qui se retrouvent dans la liste L2 stockée en mémoire est supérieur à une valeur de seuil S, e.g. 40% ou 50%. Dans le cas contraire, i.e. P<S, les listes sont considérées comme très différentes. Par exemple, si la liste L1 comprend 5 points d'accès et que parmi ces 5 points d'accès 3 se retrouvent dans la liste L2, alors les deux listes sont considérées comme similaires car 60% des points d'accès de L1 se retrouvent dans L2. En revanche, si parmi ces 5 points d'accès un seul se retrouve dans la liste L2, alors les deux listes sont considérées comme très différentes car seuls 20% des points d'accès de L1 se retrouvent dans L2.Dans une autre variante de réalisation, la détermination du déplacement du nœud N2 hors du réseau local initial (S200) est effectuée par un utilisateur par appui sur un bouton du nœud N2 ou par une sélection d'une entrée dans un menu.

En référence à la Fig.3, si le nœud N2 détermine qu'il a été déplacé hors du réseau local initial, alors il met en œuvre l'étape S210. Lors de l'étape S210, le nœud nomade N2 met en place un réseau local LAN3 en activant une fonctionnalité de serveur d'adresses.

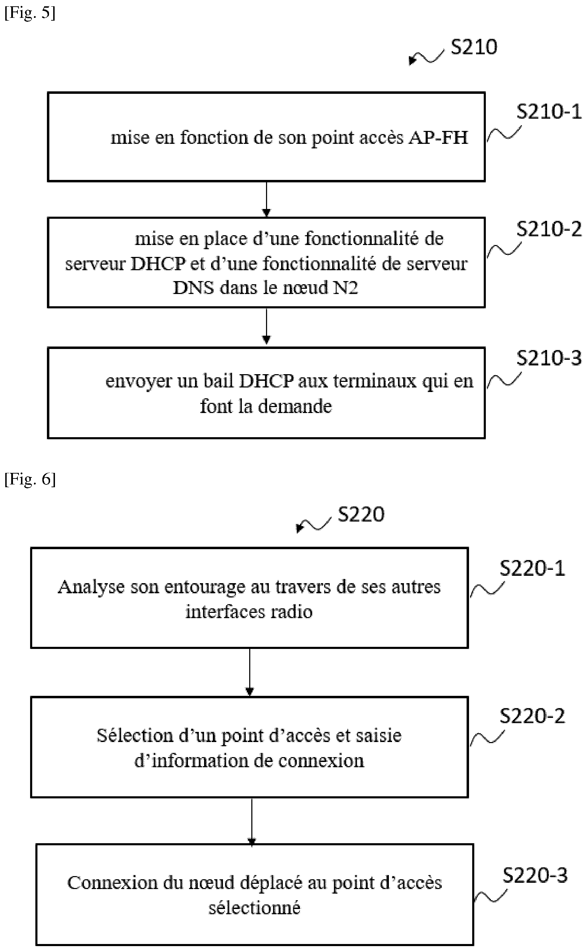

La **Fig.5** illustre schématiquement une mise en œuvre particulière de l'étape S210. Lors d'une étape S210-1, le nœud N2 met en fonction son interface radio point d'accès AP-FH, telle qu'elle était configurée en situation normale de fonctionnement, i.e. avant le déplacement du nœud N2. Le nœud N2 utilise notamment le même SSID et le même mot de passe que ceux utilisés avant le déplacement du nœud N2, i.e. dans la configuration de la Fig. 1. Ceci permet à l'ensemble des terminaux, en l'occurrence T1 et T2 sur la Fig. 2, préalablement enregistrés sur le réseau local initial de se connecter à nouveau au nœud N2. Lors d'une étape S210-2, le nœud N2 active une fonctionnalité de serveur DHCP (acronyme anglais de « Dynamic Host Configuration Protocol ») laquelle est attachée à son point d'accès AP-FH. Le serveur DHCP hébergé par N2 s'auto-attribue une adresse IP fixe laquelle est définie dans une tranche d'adresses IP, e.g. dans la tranche 192.168. 1.xxx.

Le nœud N2 met également en place une fonctionnalité de serveur DNS (acronyme anglais de « Domain Name System ») lequel traduit les noms de domaine en adresse IP et vice-versa. L'adresse IP du serveur DNS est celle du serveur DHCP.

Lors d'une étape S210-3, le serveur DHCP de N2 délivre des adresses IP aux terminaux qui en font la demande. Plus précisément, le serveur DHCP fournit un bail (attribution d'adresse IP) tel que défini par le document normatif RFC 1531, modifié et complété par les documents normatifs RFC 1534, RFC 2131 et RFC 2132. Un bail comprend généralement une adresse IP et une durée de validité. Classiquement, l'attribution d'une adresse IP se fait par diffusion par le terminal T1 ou T2 d'une requête de type DHCPDISCOVER pour localiser un serveur de type DHCP. La requête de type DHCPDISCOVER comprend l'adresse physique (ou adresse MAC) du terminal. Le nœud N2 reçoit le message DHCPDISCOVER sur son point d'accès AP-FH. En réponse, il émet une réponse de type DHCPOFFER, i.e. une offre de bail IP, qui comprend notamment l'adresse IP du serveur DHCP, ainsi que l'adresse IP qu'il propose au terminal. En général, le terminal va alors émettre un message DHCPREQUEST par lequel il sélectionne une offre de bail IP. Le message DHCPREQUEST comporte l'identification du serveur DHCP sélectionné. Le serveur DHCP sélectionné envoie un message d'acquittement DHCPACK qui peut notamment contenir l'adresse du serveur DNS.

Ainsi, les terminaux T1 et T2 deviennent fonctionnels vis-à-vis du réseau local LAN3. Le nœud N2 se retrouve alors destinataire de toute requête IP en provenance de T1 et T2 et à destination de l'Internet.

En référence à la Fig.3, lors d'une étape S220, le nœud déplacé est connecté à un point d'accès à l'internet. Selon un mode particulier de réalisation, ce point d'accès est sélectionné à partir d'un terminal, e.g. T1 ou T2, connecté audit réseau local LAN3.

La **Fig.6** illustre schématiquement une mise en œuvre particulière de l'étape S220.

Lors d'une étape S220-1, le nœud N2 détermine une liste d'au moins un point d'accès vers lequel il est susceptible de se connecter. A cet effet, des messages (requête et réponse) de sonde (« probe » en anglais) sont échangés entre le nœud N2 et d'autres points d'accès. Grâce à l'échange de ces messages de sonde, le nœud N2 reçoit des informations en provenance des points d'accès, e.g. la passerelle GW2, auxquels il est susceptible de se connecter.

Lors d'une étape S220-2, le nœud N2 présente une page web en réponse à toute requête de navigation vers l'Internet émise par un terminal. Cette étape est connue sous le nom de portail captif (« captive portal » en anglais). Elle consiste à rediriger les requêtes de navigation vers l'Internet d'un utilisateur vers une page web spéciale avant qu'il accède à l'Internet normalement. Cette page web comprend notamment la liste des points d'accès obtenue à l'étape S220-1. L'utilisateur au travers du terminal ayant émis la requête de navigation vers l'Internet sélectionne, via la page web, l'un des points d'accès de la liste et saisit des informations de connexion, e.g. informations d'authentification (e.g. SSID, mot de passe), paiement (e.g. numéro de carte de crédit), adresse mail, etc. afin d'accéder à l'Internet.

Lors d'une étape S220-3, le nœud N2 se connecte par son interface radio client ST-BH au point d'accès, i.e. à la passerelle GW2 sur la Fig. 2, sélectionné par l'utilisateur à l'étape S220-3.

Au terme de l'étape S220, le nœud N2 se trouve à l'intersection du réseau local LAN3 dont font partie les terminaux T1 et T2 et du réseau local LAN2 présenté par le point d'accès sélectionné à l'étape S220-2, en l'occurrence la passerelle GW2 sur la Fig.2. Les adresses IP délivrées par le serveur DHCP embarqué dans le nœud N2 doivent être différentes des adresses utilisées par le réseau local LAN2 offert par la passerelle GW2. Dans le cas particulier où il y a conflit entre les deux, l'étape S210 est relancée après l'étape S220 avec une tranche d'adresses IP différente de celles délivrées par GW2, l'interface radio AP-FH du nœud N2 est également relancée pour forcer les terminaux à se reconnecter et à obtenir une adresse IP dans LAN3 appartenant à la nouvelle tranche d'adresse IP.

Etant à l'intersection des deux réseaux LAN2 et LAN3, le nœud N2 met en œuvre une fonctionnalité de routage pour router vers la passerelle GW2 les données à destination de l'Internet transmises par les terminaux de son réseau local LAN3.

Il joue ainsi le rôle de passerelle intermédiaire ou de concentrateur. Il permet aux terminaux T1 et T2 d'accéder à l'Internet au travers d'une seule connexion physique au réseau LAN2 laquelle est supportée par le nœud N2.

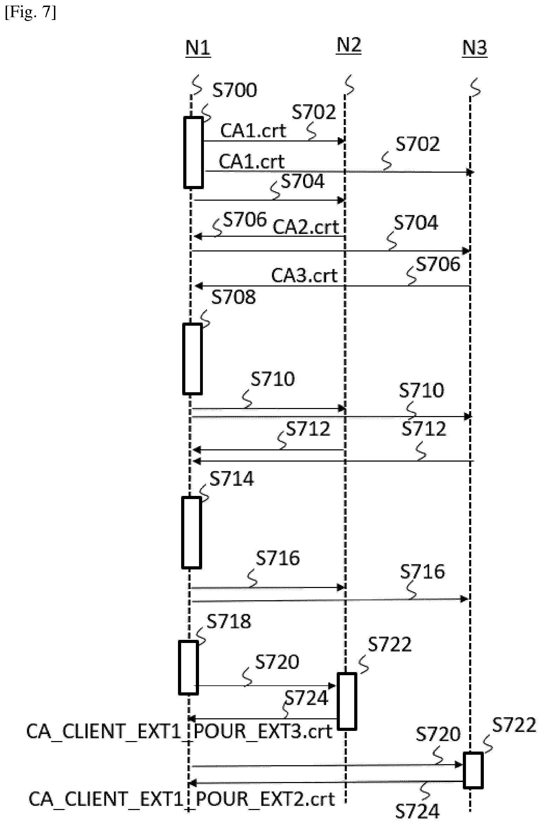

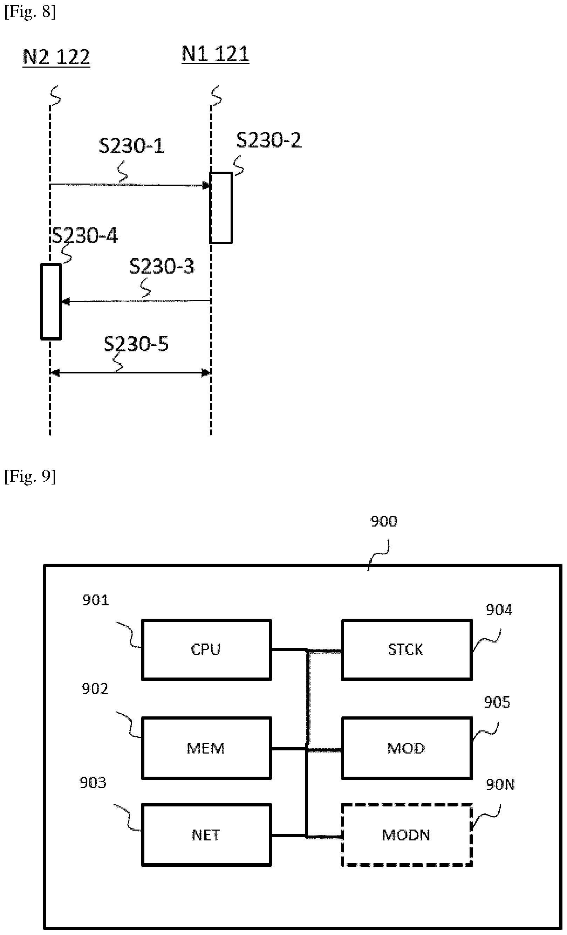

En référence à la Fig.3, lors d'une étape S230, un tunnel sécurisé est mis en place entre le nœud déplacé N2 et un nœud maître du réseau local initial, en l'occurrence N1 sur la Fig. 2. A cet effet, une interface logique IL.N2 est montée dans le nœud N2 du côté LAN3 et une interface logique IL.N1 est montée dans le nœud N1. Un tunnel est alors mis en place entre les deux interfaces logiques. Ainsi, tout le trafic dans le nœud N2 à destination de IL.N2 se retrouvera sur IL.N1 dans le nœud N1. Les paramètres (e.g. des certificats) d'accès au tunnel sécurisé sont configurés et donc connus de l'ensemble des nœuds du réseau local initial LAN1. Par exemple, les paramètres sont générés et stockés pour chaque nœud du réseau local initial LAN1 lors de leur connexion au réseau local initial LAN1 ou lors de leur première communication avec le réseau local initial LAN1. Notamment, le nœud N2 a connaissance de ces paramètres avant son déplacement, i.e. alors qu'il fait partie physiquement du réseau local initial LAN1. Un exemple de procédé de configuration de ces paramètres est illustré sur la **Fig. 7****.** La **Fig.8** illustre schématiquement une mise en œuvre particulière de l'étape S230.

En référence à la Fig.3, lors d'une étape S240, la fonctionnalité de serveur d'adresses du nœud déplacé est désactivée et une fonctionnalité de client d'un serveur d'adresses dudit réseau local initial LAN1 est activée.

Selon un mode particulier de réalisation, le serveur DHCP mis en place à l'étape S210-2 est désactivé et une fonctionnalité de client d'un serveur DHCP est activée. L'adresse IP fixe attribuée au serveur DHCP hébergé par le nœud N2 à l'étape S210-2 est donc supprimée. Les liaisons Wi-Fi entre l'interface radio AP-FH et les terminaux sont redémarrées en éteignant et en rallumant l'interface radio. Dans une variante, des requêtes de dés-association sont envoyées. De cette manière, le nœud N2 et les terminaux raccordés au point d'accès AP-FH du nœud N2 obtiennent chacun une adresse IP fournie par le serveur DHCP du LAN1. Ainsi, N2 et les terminaux T1 et T2 font partie du LAN1. Une liaison « backhaul » est établie entre le nœud nomade N2 et le nœud maître N1. De cette manière, le nœud nomade N2 se trouve être une extension du système de couverture de communication sans-fil.

La table de routage se met alors à jour toute seule. La table de routage étant mise à jour, si le terminal T1 cherche à joindre une adresse qui ne fait pas partie du réseau local initial LAN1, le routage propage les messages vers GW2. Les terminaux T1 et T2 reliés directement à N2 partagent ainsi l'accès à l'Internet fourni par GW2.

Les terminaux, qu'ils soient raccordés sur la partie restée locale, ou sur le nœud N2 nomade sont donc raccordés au même réseau local initial LAN1. Ainsi, le terminal T1 et le T2 peuvent accéder aux services (e.g. montage d'un disque réseau au moyen d'un protocole particulier de type Samba, envoi d'un flux vidéo sur une TV connectée en utilisant un protocole particulier de type Chromecast, etc) offerts par le LAN1 comme s'ils étaient à domicile. Par exemple, le terminal T1 s'il est doté d'une fonctionnalité de navigation UPnP (acronyme anglais de « Universal Plug and Play ») peut accéder au contenu multimedia proposé par un serveur NAS, e.g. le nœud N3, doté de la même fonctionnalité UPnP. Les terminaux T1 et T2 peuvent également bénéficier en déplacement du même pare feu qu'à domicile.

La **Fig. 7** illustre schématiquement un procédé de configuration, dans les nœuds du réseau local initial LAN1, de paramètres (e.g. certificats, clés publiques et privées) utiles à la mise en œuvre d'un tunnel sécurisé. Sur la Fig.7, le nœud N1 est supposé être un nouveau nœud du réseau local initial LAN1 alors que les nœuds N2 et N3 sont supposés être déjà présents dans le réseau local initial LAN1. La configuration des paramètres pour le nœud N1 a par exemple lieu lors de sa connexion au réseau local initial LAN1.

Lors d'une étape S700, le nœud N1 crée une autorité de certification laquelle émet un certificat racine (« root certificate » en anglais) CA1.crt. Ce certificat racine est auto-signé pour son nom distinctif (« Distinguished Name » en anglais), e.g. son nom de domaine, avec une clé privée associée. De manière générale, un certificat est émis par une autorité de certification. Il contient une clé publique et diverses informations concernant principalement l'identité de l'émetteur.

Lors d'une étape S702, le nœud N1 envoie son certificat racine auto-signé CA1.crt à tous les autres nœuds connectés au réseau local initial LAN1, notamment à N2 et N3.

Lors d'une étape S704, le nœud N1 envoie à tous les autres nœuds connectés au réseau local initial LAN1, notamment à N2 et N3, une demande de collecte de certificat racine. Lors d'une étape S706, le nœud N1 reçoit les certificats racines auto-signés émis par les autorités de certifications des nœuds N2 et N3, i.e. CA2.crt et CA3.crt respectivement. Lors d'une étape S708, le nœud N1 génère un serveur PKi (acronyme anglais de « Public Key Infrastructure ») dont la clé publique est signée avec son certificat racine CA1.crt. La clé publique sera transmise par une application serveur de gestion du tunnel (e.g. serveur VPN/TLS) via le certificat CA_SERVER_EXT1.crt au moment de l'établissement de la connexion. Elle permettra à une application cliente de gestion du tunnel (e.g. client VPN/TLS) d'identifier de façon certaine le serveur PKi grâce à sa validation par le certificat racine CA1.crt.

Lors d'une étape S710, le nœud N1 émet vers les autres nœuds du réseau, notamment N2 et N3, une demande de génération de Pki client. Sur réception de cette demande, les nœuds N2 et N3 génèrent un Pki client et envoient une demande de signature de certificat (CSR ou « Certificat Signing Request » en anglais) au nœud N1. Le CSR contient des informations d'identification du nœud émetteur, et la clé publique choisie par ledit nœud. La clé privée correspondante n'est pas incluse dans le CSR, mais est utilisée pour signer numériquement la demande.

Lors d'une étape S712, le nœud N1 reçoit les CSR des nœuds N2 et N3.

Lors d'une étape S714, le nœud N1 signe les CSR reçus avec son certificat racine CA1.crt. Lors d'une étape S716, le nœud N1 envoie aux nœuds N2 et N3 leurs CSRs signés par son certificat racine. Le CSR émis par le nœud N2 et signé par le CA racine de N1 est noté CA_CLIENT_EXT2_POUR_EXT1.crt et le CSR émis par le nœud N3 et signé par le CA racine de N1 est noté CA_CLIENT_EXT3_POUR_EXT1.crt.

Lors d'une étape S718, le nœud N1 va également générer un Pki client et envoyer lors d'une étape S720 un CSR à tous les nœuds du réseau local initial LAN1, notamment N2 et N3.

Les nœuds du réseau vont alors signer, lors d'une étape S722, le CSR reçu du nœud N1 avec leur propre certificat racine. Le CSR signé est alors renvoyé au nœud N1. Le CSR émis par le nœud N1 et signé par le CA racine de N2 est noté

CA_CLIENT_EXT1_POUR_EXT2.crt et le CSR émis par le nœud N1 et signé par le CA racine de N3 est noté CA_CLIENT_EXT1_POUR_EXT3.crt

Toutes les clés privées (CA, PKi server et PKi client) peuvent être chiffrées en utilisant la technologie PEM (acronyme anglais de « Privacy Enhanced Mail ») avec un secret connu seulement du nœud (e.g. l'utilisation d'un secret matériel enfoui si un tel secret est disponible). Cela garantit qu'un équipement qui arriverait à dérober ces informations ne pourrait pas les utiliser. Un crypto-processeur TMP (acronyme anglais de « Trusted Platform Module ») est un exemple d'un tel secret matériel enfoui. Il permet permet la sécurisation d'un système par intégration de clés de chiffrement dans le matériel. Les clés, qui peuvent être uniques par équipement, sont flashées à l'usine et ne peuvent plus jamais être lues. Le crypto-processeur fournit des interfaces de programmation (« Application Programming Interface » ou API en anglais) de chiffrement/déchiffrement mais ne dévoile jamais les clés.

Les nœuds du réseau local initial LAN1 ont également besoin de connaître le nom de domaine correspondant à la passerelle GW1 ainsi qu'un numéro de port spécifique pour la joindre afin de mettre en place un tunnel sécurisé avec le nœud maître. Le numéro de port est prédéfini, par exemple 5253. Le nom de domaine a été enregistré dans le DNS dynamique ou DynDNS, à la construction, ou sur une configuration utilisateur.

A la fin de la configuration, chaque nœud du LAN1 possède ainsi :
a) Une clé DH (acronyme anglais de Diffie-Hellman) pour le chiffrement du tunnel ;
b) La clé privée de son autorité de certification et les certificats racines de tous les extendeurs (y compris le sien) ;
c) La clé privée de son serveur Pki et le certificat associé, i.e. CA_SERVER_EXT1.crt ;
d) La clé privée de son client Pki et les certificats clients délivrés par tous les nœuds (sauf le sien) ;
e) Le nom de domaine correspondant à la passerelle GW1 ; et
f) Le numéro de port à utiliser spécifique pour la joindre afin de mettre en place le tunnel.

A la fin de la configuration, chaque nœud a donc à sa disposition tous les paramètres pour établir un tunnel sécurisé en tant que nœud maître du réseau local initial LAN1 ou bien en tant que nœud nomade.

Ainsi, le nœud maître du réseau local initial LAN1 peut démarrer un serveur VPN en utilisant la clé privée de son serveur Pki, le certificat associé, le certificat racine ayant servi à le chiffer et sa clé DH. Avantageusement, le serveur ne sera mis en place que lorsque au moins un des nœuds est détecté absent.

La **Fig. 8** illustre schématiquement une mise en œuvre particulière d'un tunnel sécurisé entre un nœud maître N1 et un nœud nomade N2. Dans un exemple de réalisation, la mise en place du tunnel sécurisé est conforme au protocole TLS successeur de SSL. Ce protocole est décrit notamment dans les documents suivants : RFC 4346 TLS v1.1, RFC 5246 TLS v1.2 et RFC 8466 TLS v1.3. Plus précisément, la section 7.3 du document RFC 5246 TLS v1.2 décrit le protocole de « poignée de main » (« Handshake protocol » en anglais) qui décrit notamment comment un serveur et un client TLS peuvent s'authentifier notamment en échangeant leurs certificats.

En situation de mobilité d'un des nœuds, en l'occurrence N2, la passerelle GW1 est configurée pour laisser les requêtes de mise en place du tunnel atteindre le nœud maître (N1 dans l'exemple de la Fig. 2). Ainsi, une requête arrivant sur un port prédéfini (par exemple 5253) sur une interface WAN (acronyme anglais de « Wide Area Network) de GW1 est redirigée vers le nœud maître N1 lequel est à même de traiter la requête.

Le nœud nomade N2 peut à tout moment essayer de connecter un tunnel sécurisé, e.g. un tunnel VPN, en utilisant un triplet (clé privée de son client Pki , certificat associé, e.g. CA_CLIENT_EXT2_POUR_EXT1.crt, certificat racine ayant servi à le chiffrer, e.g. CA1.crt) à destination du nom de domaine correspondant à la passerelle GW1 au travers du numéro de port prédéfini. Une connexion utilisant ces informations ne sera possible qu'avec le nœud contenant la clé privée associée au certificat racine.

Lors d'une étape S230-1, le nœud nomade N2 envoie une demande de connexion au nœud N1. La demande de connexion comprend un certificat

CA_CLIENT_EXT2_POUR_EXT1.crt. Le serveur VPN/TLS n'acceptera un client que lorsque le certificat sera signé par l'autorité de certification du nœud maître. Cela garantit que le client est bien connu et autorisé.

Lors d'une étape S230-2, le nœud N1 valide le certificat reçu en utilisant CA1.crt. Ainsi, le nœud N2 est identifié par le nœud N1 comme appartenant au réseau local LAN1.

Lors d'une étape S230-3, le nœud N1 confirme la demande de connexion en envoyant un certificat CA_SERVER_EXT1.crt.

Lors d'une étape S230-4, le nœud N2 valide le certificat reçu en utilisant CA1.crt. Ainsi, le nœud N1 est identifié par le nœud N2 comme étant le nœud ciblé pour la mise en place du tunnel.

Dès lors, le dialogue entre les nœuds N1 et N2 est authentifié et un tunnel est mis en place lors d'une étape S230-5 lequel est chiffré par une clé DH (acronyme anglais de « Diffie-Hellman »).

Optionnellement, la clé privée du nœud nomade N2 est protégée par un secret matériel enfoui. La connexion d'un nœud nomade étranger au réseau local LAN1 ou d'un équipement malveillant connaissant la clé privée est ainsi impossible.

En cas d'échec de la connexion, par exemple si le maître a changé depuis le départ du nœud nomade N2 et n'est plus le nœud N1, le nœud nomade utilise le triplet suivant (clé privée de son client Pki, certificat associé, e.g. CA_CLIENT_EXT2_POUR_EXT3.crt, certificat racine ayant servi à le chiffrer, e.g. CA3.crt), ceci jusqu'au succès de la connexion.

La Fig. 9 illustre schématiquement l'architecture matérielle d'un dispositif électronique ou nœud d'un réseau de communication sans fil, le nœud étant configuré pour exécuter tout ou partie des étapes des procédés illustrés dans les Figs. 3 à 8.

Ainsi, le dispositif électronique 900 comprend, reliés par un bus de communication : un processeur ou CPU (« Central Processing Unit » en anglais) 901 ; une mémoire MEM 902 de type RAM (« Random Access Memory » en anglais), ROM (« Read Only Memory » en anglais) et/ou EPROM (« Erasable Programmable Read Only Memory » en anglais), possiblement un module réseau NET 903, par exemple de type Ethernet, un module de stockage STCK 904 de type stockage interne et possiblement une pluralité de modules radiofréquences 905 à 90N conformes à une norme de type IEEE 802.11. Le dispositif électronique 900 peut optionnellement comprendre une ou plusieurs interfaces d'entrée/sortie non représentées sur la Fig. 9 (e.g. un clavier, une souris, un pavé tactile (« touchpad » en anglais, une webcam, etc), chacune étant configurée pour afficher des informations et/ou permettre à un utilisateur de rentrer des commandes ou des données. Le dispositif électronique 900 peut également comprendre une source d'énergie non représentée sur la Fig. 9 qui peut également être externe au dispositif électronique.

Le module de stockage STCK 904 peut être de type disque dur HDD (« Hard Disk Drive » en anglais) ou SSD (« Solid-State Drive » en anglais), ou de type lecteur de support de stockage externe, tel un lecteur de cartes SD (« Secure Digital » en anglais).

Le processeur CPU 901 peut enregistrer des données, ou informations, dans la mémoire MEM 902 ou dans le module de stockage STCK 904. Le processeur CPU 901 peut lire des données enregistrées dans la mémoire MEM 902 ou dans le module de stockage STCK 904. Ces données peuvent correspondre à des paramètres de configuration, e.g. les certificats. Le module réseau NET 903, si présent, permet typiquement la connexion du dispositif électronique 900 à un réseau local et/ou Internet. Chaque module radiofréquence 905 à 90N permet au dispositif électronique 900 d'établir une pluralité d'interfaces radiofréquences conforme à une norme dite Wi-Fi. Une interface radiofréquence peut être un point d'accès, i.e. AP-FH ou AP-BH, ou au contraire une interface radiofréquence dite utilisateur, ST-BH, permettant une association à une interface radiofréquence dite point d'accès d'un autre dispositif électronique.

Le processeur CPU 901 est capable d'exécuter des instructions chargées dans la mémoire MEM 902, par exemple à partir du module de stockage STCK 904. Lorsque le dispositif électronique 900 est mis sous tension, le processeur CPU 901 est capable de lire de la mémoire MEM 902 des instructions et de les exécuter. Ces instructions forment un programme d'ordinateur causant la mise en œuvre, par le processeur CPU 901, de tout ou partie des procédés et étapes décrits ci-avant, particulièrement le procédé décrit dans les Figs. 3 à 8. Ainsi, tout ou partie des procédés et étapes décrits ci-avant peut être implémenté sous forme logicielle par exécution d'un ensemble d'instructions par une machine programmable, telle qu'un DSP (« Digital Signal Processor » en anglais) ou un microcontrôleur. Tout ou partie des procédés et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). Les fonctions du dispositif électronique 900 peuvent être intégrées dans un nœud d'un réseau sans fil conforme à une norme 802.11 IEEE par une mise à jour d'un logiciel, c'est-à-dire par exemple par mise à jour du microprogramme (« firmware » en anglais) du dispositif électronique 900.

## Revendications

1. Un procédé de connexion d'un nœud d'un système d'extension de couverture de communication sans-fil comportant un sous-réseau d'acheminement en forme d'arbre comportant un ensemble de nœuds interconnectés sans-fil ou de manière filaire par des liaisons dites d'acheminement, une pluralité de nœuds du sous-réseau d'acheminement implémentant une fonctionnalité de point d'accès d'un même réseau de communication sans-fil, le système d'extension de couverture de communication sans-fil étant adapté pour permettre de connecter des dispositifs auxdits nœuds par le biais du réseau de communication sans-fil ou de manière filaire afin de former un réseau local initial, ledit procédé de connexion comprenant les étapes suivantes exécutées par ledit nœud :
- déterminer (S200) si ledit nœud a été déplacé hors dudit réseau local initial ;
et dans le cas où le nœud a été déplacé :
- mettre (S210) en place un réseau local à partir dudit nœud déplacé en activant une fonctionnalité de serveur d'adresses ;
- connecter (S220) ledit nœud déplacé à un point d'accès à l'internet ;
- mettre en place (S230) un tunnel sécurisé entre ledit nœud déplacé et un nœud maître coordonnant ledit réseau local initial ;
- désactiver (S240) la fonctionnalité de serveur d'adresses et activer une fonctionnalité de client d'un serveur d'adresses dudit réseau local initial.

2. Le procédé selon la revendication 1, dans lequel déterminer si ledit nœud a été déplacé hors dudit réseau local initial comprend :
- tenter d'établir pendant une durée prédéfinie une liaison d'acheminement entre ledit nœud et au moins un autre nœud dudit sous-réseau d'acheminement ;
- déterminer que ledit nœud a été déplacé hors dudit réseau local initial dans le cas où ladite tentative a échoué.

3. Le procédé selon la revendication 1, dans lequel déterminer si ledit nœud a été déplacé hors dudit réseau local initial comprend déterminer que ledit nœud a été déplacé hors dudit réseau local initial dans le cas où une liste de points d'accès visibles par une interface radio dudit nœud, dite première liste, est très différente d'une seconde liste de points d'accès stockée en mémoire, ladite seconde liste étant une liste de points d'accès qui étaient visibles par ladite interface radio lorsque ledit nœud était dans ledit réseau local initial, lesdites première et seconde listes étant très différentes dans le cas où un pourcentage de points d'accès de la première liste qui se retrouvent dans la seconde liste est inférieur à une valeur de seuil.

4. Le procédé selon l'une des revendications 1 à 3, dans lequel mettre en place un réseau local à partir dudit nœud déplacé en activant une fonctionnalité de serveur d'adresses comprend :
- mettre en fonction sa fonctionnalité de point d'accès dudit réseau de communication sans-fil;
- mettre en place une fonctionnalité de serveur DHCP et une fonctionnalité de serveur DNS ; et
- envoyer un bail DHCP aux terminaux qui en font la demande.

5. Le procédé selon l'une des revendications 1 à 4, dans lequel connecter ledit nœud déplacé à un point d'accès à l'internet comprend :
- déterminer une liste d'au moins un point d'accès auquel ledit nœud peut se connecter ;
- sélectionner un point d'accès dans ladite liste à partir d'une page web affichée sur un écran d'un terminal connecté audit nœud déplacé ; et
- connecter ledit nœud déplacé audit point d'accès sélectionné.

6. Le procédé selon l'une des revendications 1 à 5, dans lequel ledit point d'accès sélectionné est une première passerelle d'accès à l'Internet.

7. Le procédé selon l'une des revendications 1 à 6, dans lequel mettre en place un tunnel sécurisé entre le nœud déplacé et ledit nœud maître, ledit nœud maître étant connecté à une seconde passerelle d'accès à l'internet, comprend:
a) envoyer à destination d'un nom de domaine correspondant à ladite seconde passerelle au travers d'un port prédéfini une demande de connexion, ladite demande de connexion comprenant un certificat client dudit nœud déplacé signé par un certificat racine d'un nœud courant ; et
b) si ledit certificat client est reçu et validé par ledit nœud maître :
- recevoir un certificat serveur dudit nœud maître signé par un certificat racine dudit nœud maître ;
- valider le certificat serveur reçu en utilisant le certificat racine dudit nœud maître ;
- établir un tunnel entre ledit nœud et ledit nœud maître.
c) sinon répéter les étapes a) à c) jusqu'à ce que ledit tunnel soit établi entre ledit nœud et ledit nœud maître, lesdites étapes étant répétées avec ladite demande de connexion comprenant un certificat client dudit nœud déplacé signé par un certificat racine d'un autre nœud différent dudit nœud courant.

8. Un nœud d'un système d'extension de couverture de communication sans-fil comportant un sous-réseau d'acheminement en forme d'arbre comportant un ensemble de nœuds interconnectés sans-fil ou de manière filaire par des liaisons dites d'acheminement, une pluralité de nœuds du sous-réseau d'acheminement implémentant une fonctionnalité de point d'accès d'un même réseau de communication sans-fil, le système d'extension de couverture de communication sans-fil étant adapté pour permettre de connecter des dispositifs auxdits nœuds par le biais du réseau de communication sans-fil ou de manière filaire afin de former un réseau local initial, ledit nœud étant configuré pour exécuter les étapes du procédé selon l'une quelconque des revendications 1 à 7.

9. Un programme d'ordinateur, **caractérisé en ce qu'**il comprend des instructions pour mettre en œuvre, par un nœud d'un sous-réseau d'acheminement d'un système d'extension de couverture de communication sans-fil, le procédé selon l'une quelconque des revendications 1 à 7, lorsque ledit programme est exécuté par un processeur dudit nœud.

10. Des moyens de stockage, **caractérisés en ce qu'**ils stockent un programme d'ordinateur comprenant des instructions pour mettre en œuvre, par un nœud d'un sous-réseau d'acheminement d'un système d'extension de couverture de communication sans-fil, le procédé selon l'une quelconque des revendications 1 à 7, lorsque ledit programme est exécuté par un processeur dudit nœud.

## Patentansprüche

1. Verfahren zum Verbinden eines Knotens eines Systems zur Erweiterung einer drahtlosen Kommunikationsabdeckung, das ein Backhaul-Subnetzwerk in Form eines Baumes umfasst, das einen Satz Knoten, die durch sogenannte Backhaul-Verbindungen drahtlos oder drahtgebunden miteinander verbunden sind, umfasst, wobei eine Vielzahl von Knoten des Backhaul-Subnetzwerks eine Zugangspunktfunktion eines gleichen drahtlosen Kommunikationsnetzwerks implementieren, wobei das System zur Erweiterung einer drahtlosen Kommunikationsabdeckung dazu angepasst ist, das Verbinden von Vorrichtungen mit den Knoten mit Hilfe des drahtlosen Kommunikationsnetzwerks oder drahtgebunden zu gestatten, um ein anfängliches lokales Netzwerk zu bilden, wobei das Verbindungsverfahren die folgenden Schritte umfasst, die durch den Knoten ausgeführt werden:
- Bestimmen (S200), ob der Knoten aus dem anfänglichen lokalen Netzwerk herausverlagert wurde;
und wenn der Knoten herausverlagert wurde:
- Einrichten (S210) eines lokalen Netzwerks anhand des herausverlagerten Knotens durch das Aktivieren einer Adressserver-Funktion;
- Verbinden (S220) des herausverlagerten Knotens mit einem Internet-Zugangspunkt;
- Einrichten (S230) eines sicheren Tunnels zwischen dem herausverlagerten Knoten und einem Master-Knoten, der das anfängliche lokale Netzwerk koordiniert;
- Deaktivieren (S240) der Adressserver-Funktion und Aktivieren einer Client-Funktion eines Adressservers des anfänglichen lokalen Netzwerks.

2. Verfahren nach Anspruch 1, wobei das Bestimmen, ob der Knoten aus dem anfänglichen lokalen Netzwerk herausverlagert wurde, Folgendes beinhaltet:
- während einer vordefinierten Dauer, Versuchen, eine Backhaul-Verbindung zwischen dem Knoten und mindestens einem anderen Knoten des Backhaul-Subnetzwerks herzustellen;
- Bestimmen, dass der Knoten aus dem anfänglichen lokalen Netzwerk herausverlagert wurde, wenn der Versuch fehlschlägt.

3. Verfahren nach Anspruch 1, wobei das Bestimmen, ob der Knoten aus dem anfänglichen lokalen Netzwerk herausverlagert wurde, das Bestimmen, dass der Knoten aus dem anfänglichen lokalen Netzwerk herausverlagert wurde, in dem Fall beinhaltet, in dem sich eine Liste von Zugangspunkten, die für eine Funkschnittstelle des Knotens sichtbar sind, als erste Liste bezeichnet, stark von einer zweiten Liste von Zugangspunkten, die in einem Speicher gespeichert ist, unterscheidet, wobei die zweite Liste eine Liste von Zugangspunkten ist, die für die Funkschnittstelle sichtbar waren, als sich der Knoten in dem anfänglichen lokalen Netzwerk befand, wobei sich die erste und die zweite Liste stark unterscheiden, wenn ein Prozentsatz von Zugangspunkten der ersten Liste, die sich in der zweiten Liste wiederfinden, kleiner als ein Schwellenwert ist.

4. Verfahren nach einem der Ansprüche 1 bis 3, wobei das Einrichten eines lokalen Netzwerks anhand des herausverlagerten Knotens durch das Aktivieren einer Adressserver-Funktion Folgendes beinhaltet:
- Einschalten seiner Zugangspunktfunktion für das drahtlose Kommunikationsnetzwerk;
- Einrichten einer DHCP-Server-Funktion und einer DNS-Server-Funktion; und
- Senden eines DHCP-Leases an die Endgeräte, die dieses anfragen.

5. Verfahren nach einem der Ansprüche 1 bis 4, wobei das Verbinden des herausverlagerten Knotens mit einem Internet-Zugangspunkt Folgendes beinhaltet:
- Bestimmen einer Liste mit mindestens einem Zugangspunkt, mit dem sich der Knoten verbinden kann;
- Auswählen eines Zugangspunkts aus der Liste anhand einer Webseite, die auf einem Bildschirm eines Endgeräts, das mit dem herausverlagerten Knoten verbunden ist, angezeigt wird; und
- Verbinden des herausverlagerten Knotens mit dem ausgewählten Zugangspunkt.

6. Verfahren nach einem der Ansprüche 1 bis 5, wobei der ausgewählte Zugangspunkt ein erstes Internet-Zugangs-Gateway ist.

7. Verfahren nach einem der Ansprüche 1 bis 6, wobei das Einrichten eines sicheren Tunnels zwischen dem herausverlagerten Knoten und dem Master-Knoten, wobei der Master-Knoten mit einem zweiten Internet-Zugangs-Gateway verbunden ist, Folgendes beinhaltet:
a) Senden, an einen Domain-Namen, der dem zweiten Gateway entspricht, und über einen vordefinierten Port, einer Verbindungsanfrage, wobei die Verbindungsanfrage ein Client-Zertifikat des herausverlagerten Knotens beinhaltet, das durch ein Stammzertifikat eines aktuellen Knotens signiert ist; und
b) wenn das Client-Zertifikat durch den Master-Knoten empfangen und validiert wird:
- Empfangen eines Server-Zertifikats von dem Master-Knoten, das durch ein Stammzertifikat des Master-Knotens signiert ist;
- Validieren des empfangenen Server-Zertifikats unter Verwendung des Stammzertifikats des Master-Knotens;
- Herstellen eines Tunnels zwischen dem Knoten und dem Master-Knoten;
c) andernfalls, Wiederholen der Schritte a) bis c), bis der Tunnel zwischen dem Knoten und dem Master-Knoten hergestellt ist, wobei die Schritte wiederholt werden und die Verbindungsanfrage dabei ein Client-Zertifikat des herausverlagerten Knotens beinhaltet, das durch ein Stammzertifikat eines anderen Knotens, der sich von dem aktuellen Knoten unterscheidet, signiert ist.

8. Knoten eines Systems zur Erweiterung einer drahtlosen Kommunikationsabdeckung, das ein Backhaul-Subnetzwerk in Form eines Baumes umfasst, das einen Satz Knoten, die durch sogenannte Backhaul-Verbindungen drahtlos oder drahtgebunden miteinander verbunden sind, umfasst, wobei eine Vielzahl von Knoten des Backhaul-Subnetzwerks eine Zugangspunktfunktion eines gleichen drahtlosen Kommunikationsnetzwerks implementieren, wobei das System zur Erweiterung einer drahtlosen Kommunikationsabdeckung dazu angepasst ist, das Verbinden von Vorrichtungen mit den Knoten mit Hilfe des drahtlosen Kommunikationsnetzwerks oder drahtgebunden zu gestatten, um ein anfängliches lokales Netzwerk zu bilden, wobei der Knoten dazu konfiguriert ist, die Schritte des Verfahrens nach einem der Ansprüche 1 bis 7 auszuführen.

9. Computerprogramm, **dadurch gekennzeichnet, dass** es Anweisungen zur Umsetzung, durch einen Knoten eines Backhaul-Subnetzwerks eines Systems zur Erweiterung einer drahtlosen Kommunikationsabdeckung, des Verfahrens nach einem der Ansprüche 1 bis 7 beinhaltet, wenn das Programm durch einen Prozessor des Knotens ausgeführt wird.

10. Speichermittel, **dadurch gekennzeichnet, dass** sie ein Computerprogramm speichern, das Anweisungen zur Umsetzung, durch einen Knoten eines Backhaul-Subnetzwerks eines Systems zur Erweiterung einer drahtlosen Kommunikationsabdeckung, des Verfahrens nach einem der Ansprüche 1 bis 7 beinhaltet, wenn das Programm durch einen Prozessor des Knotens ausgeführt wird.

## Claims

1. A method for connecting a node of a wireless-communication coverage-extension system comprising a backhaul subnetwork in tree form comprising a set of nodes interconnected by wireless or cable by so-called backhaul connections, a plurality of backhaul subnetwork nodes implementing an access-point functionality of one and the same wireless communication network, the wireless-communication coverage-extension system being adapted for making it possible to connect devices to said nodes by means of the wireless communication network or by cable in order to form an initial local area network, said connection method comprising the following steps performed by said node:
- determining (S200) whether said node has been moved out of said initial local area network;
and, in the case where the node has been moved:
- establishing (S210) a local area network from said moved node by activating an address-server functionality;
- connecting (S220) said moved node to a point of access to the internet;
- establishing (S230) a secure tunnel between said moved node and a master node coordinating said initial local area network;
- deactivating (240) the address-server functionality and activating a client functionality of an address server of said initial local area network.

2. The method according to claim 1, wherein determining whether said node has been moved out of said initial local area network comprises:
- attempting to establish, during a predefined time, a backhaul connection between said node and at least one other node of said backhaul subnetwork;
- determining that said node has been moved out of said initial local area network in the case where said attempt has failed.

3. The method according to claim 1, wherein determining whether said node has been moved out of said initial local area network comprises determining that said node has been moved out of said initial local area network in the case where a list of access points visible to a radio interface of said node, referred to as first list, is very different from a second list of access points stored in memory, said second list being a list of access points that were visible to said radio interface when said node was in said initial local area network, said first and second lists being very different in the case where a percent-age of access points of the first list that are found in the second list is below a threshold value.

4. The method according to one of claims 1 to 3, wherein establishing a local area network from said moved node by activating an address-server functionality comprises:
- functionalising its access-point functionality of said wireless communication network;
- establishing a DHCP server functionality and a DNS server functionality; and
- sending a DHCP lease to the terminals that so request.

5. The method according to one of claims 1 to 4, wherein connecting said moved node to a point of access to the internet comprises:
- determining a list of at least one access point to which said node can connect;
- selecting an access point in said list from a web page displayed on a screen of a terminal connected to said moved node; and
- connecting said moved node to said selected access point.

6. The method according to one of claims 1 to 5, wherein said selected access point is a first access gateway to the internet.

7. The method according to one of claims 1 to 6, wherein establishing a secure tunnel between the moved node and said master node, said master node being connected to a second access gateway to the internet, comprises:
a) sending a connection request to a domain name corresponding to said second gateway through a predefined port, said connection request comprising a client certificate of said moved node signed by a root certificate of a current node; and
b) if said client certificate is received and validated by said master node:
- receiving a server certificate of said master node signed by a root certificate of said master node;
- validating the server certificate received using the root certificate of said master node;
- establishing a tunnel between said node and said master node;
c) otherwise repeating the steps a) to c) until said tunnel is established between said node and said master node, said steps being repeated with said connection request comprising a client certificate of said moved node signed by a root certificate of another node different from said current node.

8. A node of a wireless-communication coverage-extension system comprising a backhaul subnetwork in tree form comprising a set of nodes interconnected by wireless or cable by so-called backhaul connections, a plurality of nodes of the backhaul subnetwork implementing an access-point functionality of one and the same wireless communication network, the wireless-communication coverage-extension system being adapted for making it possible to connect devices to said nodes by means of the wireless communication network or by cable in order to form an initial local area network, said node being configured for performing the steps of the method according to any one of claims 1 to 7.

9. A computer program, **characterised in that** it comprises instructions for implementing, by a node of a backhaul subnetwork of a wireless-communication coverage-extension system, the method according to any one of claims 1 to 7, when said program is executed by a processor of said node.

10. Storage means, **characterised in that** they store a computer program comprising instructions for implementing, by a node of a backhaul subnetwork of a wireless-communication coverage-extension system, the method according to any one of claims 1 to 7, when said program is executed by a processor of said node.
